(19) Europäisches Patentamt
European Patent Office
Office européen des brevets

(11) **EP 2 881 841 B1**

(12) **FASCICULE DE BREVET EUROPEEN**

(45) Date de publication et mention
de la délivrance du brevet:
**31.07.2019 Bulletin 2019/31**

(51) Int Cl.:
***G06F 3/01*** *(2006.01)*   ***G06F 1/32*** *(2019.01)*

(21) Numéro de dépôt: **14195377.8**

(22) Date de dépôt: **28.11.2014**

(54) **Procédé de reconnaissance continue de gestes d'un utilisateur d'un terminal mobile préhensible muni d'un ensemble capteur de mouvement, et dispositif associé**

Kontinuierliches Gestenerkennungsverfahren eines Benutzers eines greifbaren mobilen Endgeräts, das mit einem Set von Bewegungssensoren ausgestattet ist, und entsprechende Vorrichtung

Method for continuously recognising gestures by a user of a hand-held mobile terminal provided with a motion sensor unit, and associated device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1362010**

(43) Date de publication de la demande:
**10.06.2015 Bulletin 2015/24**

(73) Titulaire: **Movea**
**38000 Grenoble (FR)**

(72) Inventeur: **Szacherski, Pascal**
**38380 Saint-Laurent-Du-Pont (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**US-A1- 2010 214 211     US-A1- 2012 016 641
US-A1- 2013 261 771**

- **THOMAS MANTHEY: "Android cookbook. Using the accelerometer to detect shaking of the device", INTERNET CITATION, 17 juillet 2010 (2010-07-17), XP007922848, Extrait de l'Internet: URL:http://androidcookbook.com/Recipe.seam ?recipeId=529 [extrait le 2014-09-30]**
- **Jiahui Wu ET AL: "Gesture Recognition with a 3-D Accelerometer" In: "Field Programmable Logic and Application", 1 janvier 2009 (2009-01-01), Springer Berlin Heidelberg, Berlin, Heidelberg, XP055142497, ISSN: 0302-9743 ISBN: 978-3-54-045234-8 vol. 5585, pages 25-38, DOI: 10.1007/978-3-642-02830-4_4, * abrégé * * alinéas [0001], [02.2], [04.2] ***

EP 2 881 841 B1

**Description**

L'invention porte sur un procédé de reconnaissance continue de gestes d'un utilisateur d'un terminal mobile préhensible muni d'un ensemble capteur de mouvement, et sur un dispositif associé.

En d'autres termes, l'invention permet de reconnaître un geste sans qu'un utilisateur n'ait à indiquer, par exemple au moyen d'un bouton de déclenchement qu'il faille activer un mode de reconnaissance de geste.

Il est connu, depuis peu, d'intégrer une reconnaissance de geste déclenchée, par exemple dans des dispositifs des télécommandes d'ensembles de télévision numérique. L'utilisateur dispose d'un élément de contrôle permettant de contrôler un système en effectuant un geste déclenché, c'est à dire que l'utilisateur doit effectuer un geste tout en appuyant sur un bouton de la télécommande.

Or, spécialement pour des terminaux mobiles à écran tactile de types tablettes tactiles ou phablettes, le fait de devoir appuyer sur un bouton pour déclencher la reconnaissance de gestes est particulièrement incommode, contrairement à une télécommande classique. Au vu de la taille des tablettes, la plupart du temps l'utilisateur tient la tablette à deux mains et il serait plus intuitif et ergonomique d'indiquer un geste en bougeant la tablette avec les mains.

En outre, la plupart des tablettes tactiles ne sont pas équipées de boutons pouvant facilement ou ergonomiquement être utilisés comme des boutons de déclenchement pour une reconnaissance de gestes.

La reconnaissance de gestes non déclenchée, ou en ligne, pour les appareils mobiles a déjà donné lieu à des publications, tel "Online gesture recognition for user interface on accelerometer built-in mobile phones," de B. W. Choe, J. K. Min, and S. B. Cho, Neural Information Processing. Models and Applications, pp. 650-657, 2010. Il y est divulgué que tous les nouveaux gestes effectués sur un téléphone mobile sont comparés à une base de données utilisant un procédé de comparaison de signaux distordus temporellement, tel que DTW (Dynamic Time Warping) issu du domaine du traitement du signal numérique. Pour limiter le temps de traitement nécessaire, un procédé d'optimisation est proposé pour le procédé DTW, dans lequel les gestes de la base de données sont regroupés et moyennés.

Le document US 2012/016641 décrit la détection d'un geste grâce au calcul d'un paramètre représentatif de son énergie. Les documents THOMAS MANTHEY: "ANDROID COOKBOOK USING THE ACCELEROMETER TO DETECT SHAKING OF THE DEVICE",

US 2010/214211 A1 et US 2013/261771 A1 décrivent la détection d'un geste grâce au calcul d'un paramètre représentatif de sa symétrie.

Un but de l'invention est de pouvoir exercer un contrôle d'un terminal mobile à écran tactile à l'aide de gestes, sans appui sur un bouton de déclenchement.

L'invention est définie uniquement par les revendications attachées.

Aussi, il est proposé, selon un aspect de l'invention, un procédé de reconnaissance continue de gestes d'un utilisateur d'un terminal mobile préhensible muni d'un ensemble capteur de mouvement muni d'un gyromètre, comprenant les étapes consistant à, pour au moins un signal de mesure du gyromètre, sur une fenêtre temporelle :- détecter (2) un geste candidat; et- comparer (3) ledit geste candidat à un ensemble de gestes prédéterminés;ladite étape de détection (2) d'un geste candidat comprenant les sous-étapes consistant à :- calculer une première valeur d'une norme d'une intégrale du signal du gyromètre sur ledit geste comme paramètre représentatif de la symétrie du geste par rapport à au moins un axe;- calculer une deuxième valeur d'un paramètre représentatif de l'énergie du geste selon au moins un axe; et- comparer si ladite première valeur est inférieure ou égale à un premier seuil (Tsym) et si ladite deuxième valeur est supérieure ou égale à un deuxième seuil (Tnrg), auquel cas détecter le geste candidat et le comparer à l'ensemble de gestes prédéterminés.

Un tel procédé permet d'exercer un contrôle d'un système à partir d'un terminal mobile tel une télécommande, un smartphone ou une tablette tactile à l'aide de gestes.

La détection de gestes candidats peut être considérée comme une présélection afin de diminuer la quantité de gestes qui sont comparés à la base de données de gestes, car ce dernier processus consomme beaucoup de puissance de calcul.

La base de données peut être générée de manière théorique (de "vraies" sinusoïdes), de manière collectée (avec un passage d'un nombre d'utilisateurs et un traitement associé), ou comparée à l'aide de fonctions.

Lorsqu'un utilisateur effectue un geste, il remet la tablette à sa position initiale. Cela signifie que le mouvement est symétrique, et un moyen facile de vérifier cette symétrie est de calculer la moyenne ou l'intégrale, qui doit être proche de zéro.

Dans un mode de mise en oeuvre, ledit paramètre représentatif de l'énergie du geste selon au moins un axe dépend de la variance dudit signal (moment d'ordre 2).

Lorsque l'utilisateur tient la tablette dans ses mains, il y a toujours des mouvements. De petites variations peuvent également être symétriques, donc pour ne pas voir cela comme un geste, le mouvement a besoin d'avoir une certaine énergie.

Un geste candidat doit être symétrique et avoir assez d'énergie ou amplitude.

Dans un mode de mise en oeuvre, ladite étape de détection d'un geste candidat comprend en outre une sous-étape de test si la valeur d'un troisième paramètre représentatif de la fréquence dominante du signal selon ledit axe est inférieure ou égale à un troisième seuil.

Ainsi, il est possible d'éliminer les tremblements et les oscillations à haute fréquence.

Ladite fenêtre temporelle peut être une fenêtre glissante.

Ainsi, il est possible de calculer les paramètres pour un nombre fixe d'échantillons, de manière continue.

Selon un mode de mise en oeuvre, le procédé comprend, en outre, une étape de comptage du nombre d'échantillons temporels successifs pour lesquels, sur la fenêtre temporelle correspondante, un geste candidat est détecté, et une étape de comparaison d'un geste candidat détecté avec un ensemble de gestes prédéterminés lorsque ledit nombre d'échantillons temporels successifs atteint un nombre prédéterminé.

En exigeant la détection d'un certain nombre de gestes candidats successifs, le système est plus robuste et a moins de faux positifs issus de manipulations accidentelles.

Le procédé peut également comprendre une étape d'adaptation automatique d'au moins un desdits seuils à l'utilisateur, par exemple au moyen d'une étape de modification d'un desdits seuils lorsque pour un geste candidat détecté, le paramètre correspondant a une valeur non comprise dans une plage de valeurs de pourcentages dudit seuil correspondant.

Cela augmente les performances pour l'utilisateur et permet de réduire le nombre de faux positifs et de faux négatifs.

Selon un mode de mise en oeuvre, le procédé comprend une étape d'adaptation automatique de la taille de la fenêtre temporelle aux durées des gestes dans l'ensemble des gestes prédéterminés ou aux durées des gestes de l'utilisateur.

Dans un mode de mise en oeuvre, au moins un desdits seuils dépend de l'orientation du terminal mobile.

Cela permet d'éliminer les faux positifs lorsque l'utilisateur se promène avec la tablette sous son bras.

Selon un mode de mise en oeuvre, ledit axe est un axe de mesure dudit capteur.

Dans un mode de mise en oeuvre, ladite sousétape consistant à calculer la valeur d'un paramètre représentatif de l'énergie du geste selon au moins un axe est effectuée lorsque ladite sous-étape consistant à calculer la valeur d'un paramètre représentatif de la symétrie du geste par rapport audit axe indique une symétrie.

Comme un geste candidat doit satisfaire à la fois une condition de symétrie et d'énergie, si le geste n'est pas symétrique, il n'y a pas besoin de calculer l'énergie.

Lesdits seuils peuvent dépendre de l'axe.

Il est également proposé, selon un autre aspect de l'invention, un dispositif de reconnaissance continue de gestes d'un utilisateur d'un terminal mobile préhensible muni d'un ensemble capteur de mouvement, comprenant des modules adaptés pour mettre en oeuvre le procédé tel que précédemment décrit.

Il est également proposé, selon un autre aspect de l'invention un terminal mobile préhensible muni d'un dispositif tel que décrit précédemment.

L'invention sera mieux comprise à l'étude de quelques modes de réalisation décrits à titre d'exemples nullement limitatifs et illustrés par les dessins annexés sur lesquels :

- la figure 1 illustre schématiquement les axes d'une tablette ;
- la figure 2 illustre schématiquement les six rotations possibles autour des axes X,Y et Z, selon un aspect de l'invention,
- la figure 3 illustre schématiquement les six translations possibles autour des axes X, Y et Z, selon un aspect de l'invention,
- la figure 4 illustre schématiquement un procédé selon un aspect l'invention,
- les figures 5a, 5b et 5c illustrent schématiquement des exemples de signaux correspondant à une rotation,
- la figure 6 illustre schématiquement un mode de mise en oeuvre d'une étape de détection de geste candidat, selon un aspect de l'invention; et
- la figure 7 illustre schématiquement un exemple de comptage de gestes candidats successif.

Dans l'ensemble de figures, les éléments ayant les mêmes références sont similaires. Dans la suite de la description l'exemple de terminal mobile décrit est une tablette, sans toutefois limiter la portée de l'invention à cet exemple. En effet, le terminal mobile peut, par exemple, être une télécommande de télévision ou un téléphone mobile.

Généralement, une tablette est prise à deux mains par son utilisateur, et ce dernier ne peut alors pas, ou très difficilement, appuyer sur un bouton de déclenchement dédié à indiquer au système qu'il effectue un geste. Cela signifie que le système doit pouvoir déterminer si oui ou non l'utilisateur effectue un geste à partir des mouvements de la tablette.

Afin d'être en mesure d'identifier un geste sans équivoque, il est préférable de prendre un ensemble de gestes orthogonal.

Si on considère deux gestes G1 et G2, sans perte de généralité, G2 est le plus petit geste (celui de plus courte durée). Les gestes G1 et G2 sont définis comme orthogonaux si G2 n'est pas une partie de G1, c'est à dire si G1 est une succession de plusieurs gestes de base, G2 n'est pas l'un de ceux-ci.

Un ensemble de gestes est dit orthogonal si tous les gestes de cet ensemble sont orthogonaux par rapport aux autres gestes.

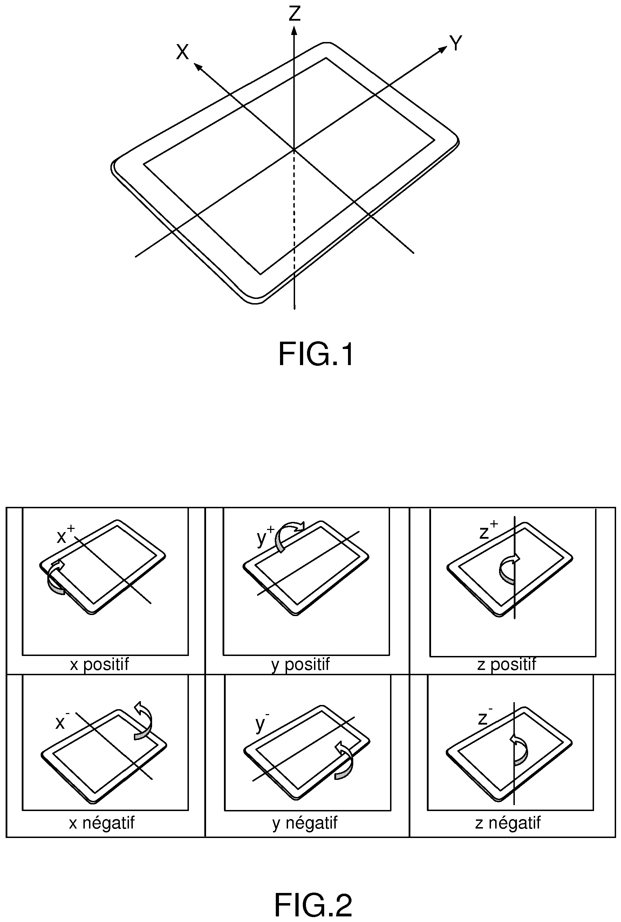

La manière la plus simple de construire un ensemble de gestes qui soit orthogonal, consiste à limiter les gestes aux axes de la tablette. La figure 1 représente les trois axes X, Y et Z d'une tablette. Ainsi, on prend les gestes de rotation autour de chacun de ces axes, et les gestes de translation selon chacun de ces axes. Comme il est possible de distinguer le sens des rotations et des translations, il est possible d'avoir deux gestes de rotation par axe, et deux gestes de translation par axe.

Par conséquent, six rotations sont identifiées, telles qu'illustrées sur la figure 2 :

une rotation positive autour de l'axe X de la tablette,
une rotation négative autour de l'axe X de la tablette,
une rotation positive autour de l'axe Y de la tablette,
une rotation négative autour de l'axe des Y de la tablette,
une rotation positive autour de l'axe Z de la tablette, et
une rotation négative autour de l'axe des Z de la tablette;

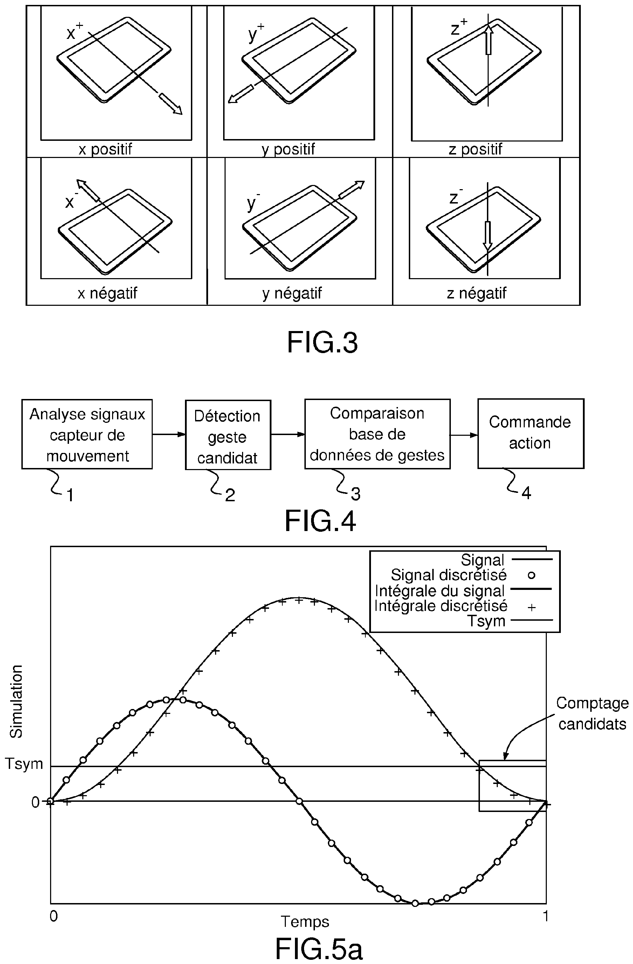

ainsi que six translations, telles qu'illustrées sur la figure 3 :

une translation positive autour de l'axe X de la tablette,
une translation négative autour de l'axe X de la tablette,
une translation positive autour de l'axe Y de la tablette,
une translation négative autour de l'axe des Y de la tablette,
une translation positive autour de l'axe Z de la tablette, et
une translation négative autour de l'axe des Z de la tablette.

Après chacun des mouvements indiqués précédemment, l'utilisateur ramène la tablette dans sa position initiale. Cela signifie qu'une rotation positive autour d'un axe de la tablette, est suivie par une rotation négative inverse. Cela signifie que le geste complet comprend la rotation positive initiale et la rotation négative finale.

Dans une utilisation dite "normale", les mains de l'utilisateur sont sur les bords courts de la tablette, le marquage de l'axe Y.

Pour effectuer un geste de rotation positive selon l'axe X, l'utilisateur doit commencer par déplacer sa main droite vers le bas ou sa main gauche vers le haut (on suppose la tablette horizontale), puis finir respectivement par déplacer sa main droite vers le haut ou sa main gauche vers le bas, de sorte que la tablette soit ramenée dans sa position initiale.

La figure 4 illustre schématiquement le procédé selon l'invention. Comme l'utilisateur n'utilise pas de boutons de déclenchement pour définir le début et la fin d'un geste, les signaux provenant des capteurs de mouvement doivent être analysés en permanence pour détecter des gestes effectués par l'utilisateur.

Cela signifie que le dispositif analyse 1 en continu les signaux fournis par un ensemble capteur de mouvement comprenant au moins un capteur de mouvement, dans une fenêtre temporelle, afin de détecter 2 un geste candidat. Lorsqu'un geste candidat est détecté 2, il est comparé 3 à un ensemble de gestes d'une base de données de gestes, par exemple au moyen d'une méthode de normalisation temporelle dynamique ou DTW pour acronyme de " Dynamic Time Warping" en langue anglaise. Si une correspondance entre le geste candidat et un geste de l'ensemble est détecté, alors une action est exécutée 4, associée au contexte d'utilisation et au geste de l'ensemble.

Afin de mesurer les mouvements du terminal mobile, par exemple la tablette, l'ensemble capteur de mouvement comprend, de préférence, un gyromètre triaxial et un accéléromètre triaxial. Le gyromètre, mesurant des vitesses de rotation angulaires, est idéal pour détecter les gestes de rotation. L'accéléromètre, mesurant des accélérations linéaires, et parfait pour détecter les gestes de translation pour lesquels aucune rotation n'est appliquée à la tablette.

En variante, les mesures fournies par l'accéléromètre et le gyromètre peuvent être fusionnées par un algorithme de fusion de données pour déterminer l'orientation et/ou la position de la tablette, et les gestes peuvent être ensuite déduits des changements de l'orientation et/ou la position de la tablette.

La figure 5a représente un exemple d'une simulation de signaux fournis par un gyromètre durant un geste de rotation selon un axe du gyromètre. On considère que l'utilisateur effectue un geste de rotation parfaitement symétrique autour d'un axe de la tablette qui correspond directement, ou par une simple transformation, à un axe du gyromètre.

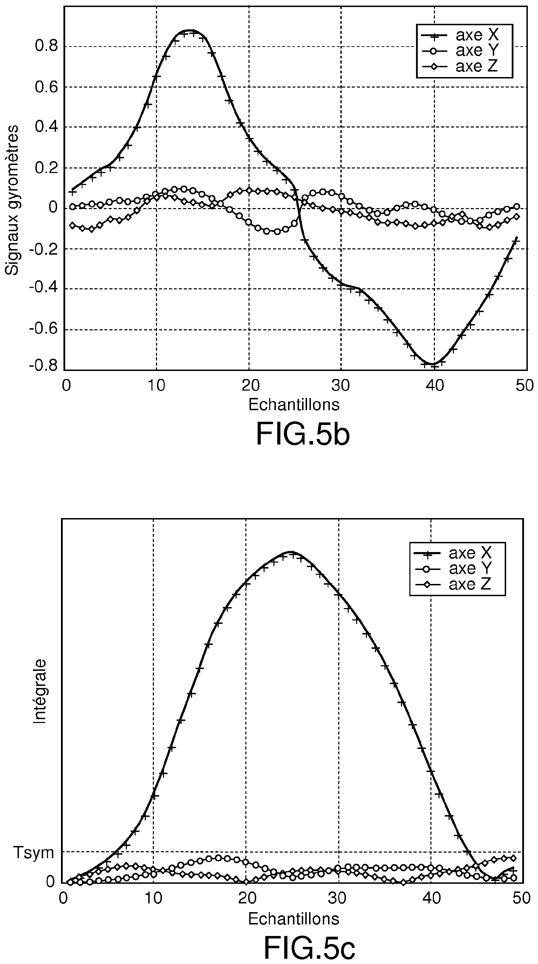

La figure 5b représente un exemple de signaux réels de gyromètre selon les trois axes (échantillonnage a 100Hz) pour le même type de gestes, comme sur la figure 5a.

Le signal du gyromètre $S_G(t)$ a alors une forme proche de la forme sinusoïdale suivante : $S_G(t) \sim \sin(2\pi t)$.

Le temps t est compris entre 0 et 1, et représente la largeur de la fenêtre temporelle, en l'espèce une fenêtre glissante utilisée pour analyser le signal du gyromètre.

Au début du mouvement, la vitesse angulaire de rotation est positive et augmente jusqu'à atteindre un maximum. L'utilisateur ralentit alors la rotation de la tablette jusqu'à atteindre l'amplitude maximale de son geste (et vitesse de rotation nulle), avant d'inverser son mouvement produisant une vitesse de rotation angulaire négative. À la fin, l'utilisateur ralentit la rotation de la tablette pour la ramener à sa position initiale.

Les figures 5a et 5c montrent également l'intégrale du signal du gyromètre depuis le début du geste, respectivement pour la simulation et les signaux réels. Comme le geste est symétrique et que l'utilisateur ramène la tablette à sa position initiale, l'intégrale du signal sur le geste complet est sensiblement égale à zéro :

$$\int_0^1 S_G(t)\, dt = \int_0^{1^-} \sin(2\pi t)\, dt = 0$$

À partir de ce qui précède, il apparaît que pour qu'un geste soit considéré comme un geste candidat, il doit être symétrique. Afin de mesurer la symétrie du geste il est possible de calculer la valeur d'un paramètre représentatif de la symétrie du geste par rapport à au moins un axe, par exemple de calculer l'intégrale du signal correspondant.

En variante, on peut calculer la moyenne du signal sur la fenêtre temporelle.

En variante, on peut calculer la différence de l'orientation et/ou la position de la tablette entre le début du geste et la fin du geste. Dans un geste symétrique, cette différence n'est pas très grande.

Ainsi, pour que le geste soit considéré comme un geste candidat, il faut qu'une norme de son intégrale soit inférieure ou égale à premier seuil $T_{sym}$ ou seuil de symétrie:

$$\left| \int_0^1 S_G(t) \right| \leq T_{sym}$$

En variante, on peut utiliser comme paramètre représentatif de la symétrie du geste la moyenne du signal sur la fenêtre temporelle. Dans ce cas, il faut qu'une norme de la moyenne sur la fenêtre temporelle avec N échantillons soit inférieure ou égale à ce premier seuil $T_{sym}$ ou seuil de symétrie:

$$\left| \overline{S_G(t)} \right| = \left| \frac{1}{N} \sum_N S_G(n) \right| \leq T_{sym}$$

La norme peut, par exemple être la valeur absolue.

Comme la tablette peut être déplacée indépendamment selon les trois axes, dans un mode mise en oeuvre amélioré de l'invention, cette condition peut être remplie sur les trois axes X, Y, Z simultanément. Toutefois le premier seuil peut avoir une valeur différente selon l'axe considéré.

Cette seule condition de symétrie n'est pas suffisante pour détecter un geste, car en l'absence de mouvement, le bruit ou signal parasite peut atteindre une intégrale ou moyenne inférieure au premier seuil.

On prend alors en compte une deuxième condition pour détecter un geste candidat, tenant compte du fait que l'amplitude ou l'énergie du geste doit être suffisamment importante. Comme paramètre représentatif de l'énergie, on peut prendre la variance du signal, dont la valeur doit être supérieure ou égale à un deuxième seuil ou seuil d'énergie $T_{nrj}$:

$$Var(S_G) = \frac{1}{N} \sum_N \left( S_G(n) - \overline{S_G} \right)^2 \geq T_{nrj}$$

Comme le premier seuil $T_{sym}$, ce deuxième seuil $T_{nrj}$ peut avoir une valeur différente selon l'axe considéré.

Lorsque l'utilisateur marche en balançant la tablette dans sa main, cela peut induire de fausses détections de rotation autour de l'axe Z. Pour éviter une telle fausse détection, il est possible d'augmenter le deuxième seuil selon l'axe Z $T_{nrj,Z}$ lorsque la tablette est tenue dans une orientation sensiblement verticale. Cette augmentation du deuxième seuil ne pose pas de problème lorsque l'utilisateur tient la tablette verticalement, par exemple, comme un volant de direction, car dans cette position, les rotations autour de l'axe Z sont très ergonomiques et donc faciles à réaliser avec une énergie suffisante pour passer le deuxième seuil en faisant un geste volontaire. L'orientation de la tablette peut être déterminée en utilisant les mesures fournies par les accéléromètres.

Par exemple, si la moyenne des $N_{acc}$ derniers échantillons de mesures de l'accéléromètre sur l'axe X ou Y sont proches d'une accélération de 1g (g correspondant à l'accélération de la pesanteur à la surface de la Terre, environ 9,81 m.s$^{-2}$), par exemple supérieure ou égale à 0,85 g, l'utilisateur tient la tablette sensiblement verticale et donc le deuxième seuil $T_{nrj,Z}$ selon l'axe Z est augmenté.

Dans le mode de mise en oeuvre précédemment décrit, on a imposé que l'intégrale ou la moyenne soit proche de zéro sur les trois axes, et que la variance soit supérieure à un seuil selon au moins un axe. Ces exigences sont très strictes, ce qui signifie que l'utilisateur doit effectuer les gestes correctement (comme dans la base de données) selon un axe particulier, sans beaucoup de mouvement selon les autres axes.

D'autres modes de réalisation moins stricts peuvent également être envisagés. Par exemple, si on est seulement intéressé par des gestes selon les axes X et Y, l'utilisateur peut être autorisé à faire des mouvements supplémentaires selon l'axe Z, qui sera négligé dans la procédure de détection de gestes. En tout cas, tous les gestes candidats pour lesquels l'utilisateur ramène la tablette à sa position initiale à la fin du geste, peu importe combien d'axes sont concernés, ont une intégrale ou moyenne proche de zéro selon ces axes et une variance supérieure ou égale au deuxième seuil $T_{nrj}$.

En plus, des deux conditions majeures, il est possible d'ajouter une autre condition pour éviter que les signaux de forte oscillation, comme des tremblements ou des oscillations de haute fréquence soient reconnus comme des gestes candidats. Dans ce cas, on peut utiliser un paramètre représentatif de la fréquence dominante par exemple sur l'axe de la rotation dominante, obtenu à partir d'une transformée de Fourier. Par exemple on peut imposer une fréquence dominante, par exemple sur l'axe de la rotation dominante, inférieure à un troisième seuil ou seuil de fréquence $T_{freq}$ , par exemple $T_{freq} = 8$ Hz.

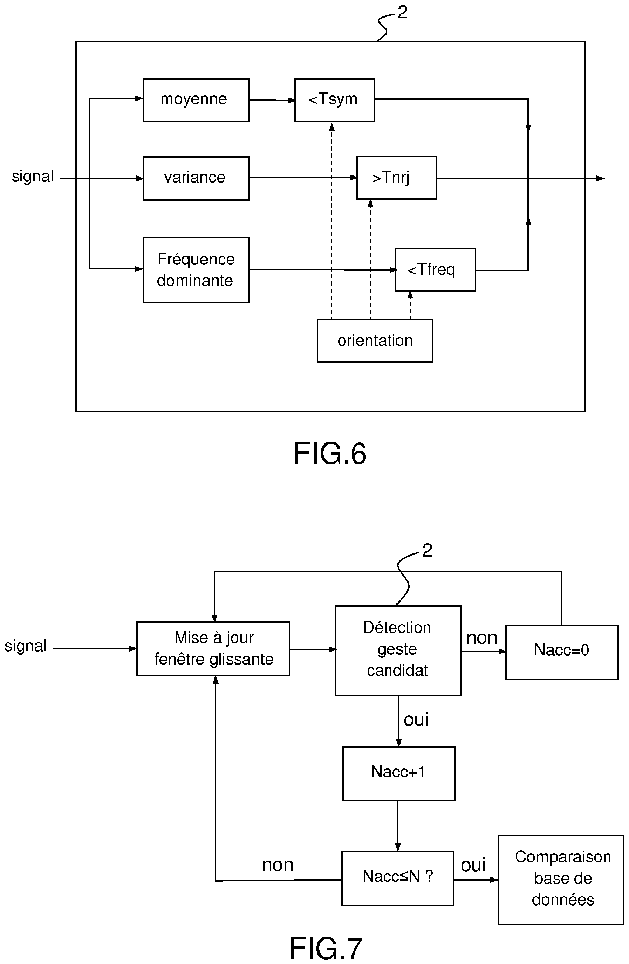

La figure 6 présente un aperçu des différentes conditions permettant de détecter un geste candidat. Les conditions sont vérifiées pour chaque fenêtre glissante, c'est à dire à chaque fois qu'un nouvel échantillon de mesure est obtenu à partir des capteurs de mouvement.

Si toutes les conditions évoquées précédemment sont remplies, le signal est considéré comme un geste de candidat. La figure 6 illustre le cas dans lequel on détecte un geste candidat lorsque les trois conditions sont remplies, mais il est possible, en variante de ne pas avoir la condition sur la fréquence dominante.

Toutefois, pour augmenter la robustesse du dispositif et du procédé selon l'invention, plusieurs gestes candidats successifs identiques peuvent être nécessaires afin de passer à l'étape suivante et de comparer le geste candidat finalement détecté avec les gestes de l'ensemble gestes d'une base de données de gestes, par exemple en utilisant une méthode DTW.

La figure 7 illustre le comptage des gestes candidats successifs. Chaque fois que les conditions sont remplies pour détecter un geste candidat, un compteur est incrémenté d'une unité. En revanche, lorsque les conditions ne sont pas remplies le compteur $N_{cand}$ est remis à zéro. Lorsque le compteur $N_{cand}$ atteint un nombre prédéfini N de gestes candidats successifs identiques, ce geste candidat courant est comparée à l'ensemble de gestes. Cela ne signifie pas que la décision finale est retardée par N échantillons après la fin du geste.

Comme le montre la figure 5c, l'intégrale ou moyenne passe déjà en dessous du premier seuil $T_{sym}$ avant la fin du geste, ce qui signifie que la condition $N_{cand}=N$ est satisfaite vers la fin du geste, n'ajoutant quasiment aucun temps de latence entre la fin de réalisation du geste et la comparaison avec l'ensemble de gestes.

Comme mentionné précédemment, les différents seuils peuvent dépendre de l'axe considéré et de l'orientation de la tablette.

En outre, les seuils peuvent aussi s'adapter automatiquement à l'utilisateur.

Considérons la première condition dans lequel la moyenne ou l'ntégrale doit être inférieure ou égale au premier seuil $T_{sym}$. Idéalement, la moyenne calculée est d'environ 50 % du premier seuil $T_{sym}$ respectif (selon X, Y ou Z). Si l'utilisateur fait un geste correct pour lequel la moyenne est par exemple de 90% du premier seuil $T_{sym}$ respectif, la condition est toujours réalisée et le signal est accepté, mais on est proche d'un rejet incorrect. Pour éviter de tels rejets erronés et avoir une marge plus importante, le premier seuil $T_{sym}$ peut être augmenté automatiquement après un certain nombre de telles situations. Des situations contraires se produisent lorsque l'utilisateur fait un geste correct pour lequel la moyenne ou l'intégrale est, par exemple à seulement 20 % du premier seuil $T_{sym}$. Si tel est le cas, à plusieurs reprises successives, cela signifie que l'utilisateur fait des gestes très corrects et symétriques, et il est préférable de diminuer le premier seuil $T_{sym}$. Si le premier seuil $T_{sym}$ est trop élevé par rapport aux gestes de l'utilisateur, il existe un risque de fausses détections, ou un geste candidat peut être détecté qui n'est pas en fait un geste prévu, mais par exemple juste un tremblement ou un sursaut.

Les autres seuils peuvent bien entendu être adaptés de manière similaire à l'utilisateur pour maintenir les paramètres correspondants aux seuils dans des plages de valeurs prédéfinies respectives. D'autres moyens d'adapter les seuils peuvent également être mises en oeuvre. Si l'utilisateur fait un geste non détecté, mais qu'il répète ce geste à faire les choses, les seuils peuvent également être adaptés. Si un geste est régulièrement détecté, mais que l'utilisateur annule l'action commandée correspondante, les seuils peuvent également être adaptés.

La taille de la fenêtre temporelle peut être adaptée (automatiquement). Par exemple, la taille de la fenêtre peut être définie comme comparable à la durée maximale des geste dans l'ensemble des gestes prédéterminés. En variante, la taille de la fenêtre temporelle peut être comparable à la durée habituelle des gestes de l'utilisateur. Comme précédemment avec l'adaptation des seuils, la taille de la fenêtre temporelle peut s'adapter automatiquement si la durée d'un ou plusieurs gestes de l'utilisateur n'est pas comprise dans une plage de valeurs de pourcentages de la taille de la fenêtre.

Les étapes du procédé décrit ci-dessus peuvent être réalisées par un ou plusieurs processeurs programmables exécutant un programme informatique pour réaliser les fonctions de l'invention en agissant sur des données d'entrée et en générant des données de sortie, dans le dispositif selon l'invention.

Un programme informatique peut être écrit dans n'importe quel langage de programmation, tels les langages compilés ou interprétés, et le programme informatique peut être déployé sous n'importe quelle forme, y compris en tant que programme autonome ou comme un sous-programme ou fonction, ou tout autre forme appropriée pour une utilisation dans un environnement informatique.

Un programme d'ordinateur peut être déployé pour être exécuté sur un ordinateur ou sur plusieurs ordinateurs sur un seul site ou sur plusieurs sites répartis et reliés entre eux par un réseau de communication.

**Revendications**

1. Procédé de reconnaissance continue de gestes d'un utilisateur d'un terminal mobile préhensible muni d'un ensemble capteur de mouvement muni d'un gyromètre, comprenant les étapes consistant à, pour au moins un signal de mesure du gyromètre, sur une fenêtre temporelle :

    - détecter (2) un geste candidat; et

- comparer (3) ledit geste candidat à un ensemble de gestes prédéterminés;

ladite étape de détection (2) d'un geste candidat comprenant les sous-étapes consistant à :

- calculer une première valeur d'une norme d'une intégrale du signal du gyromètre sur ledit geste comme paramètre représentatif de la symétrie du geste par rapport à au moins un axe;
- calculer une deuxième valeur d'un paramètre représentatif de l'énergie du geste selon au moins un axe; et
- comparer si ladite première valeur est inférieure ou égale à un premier seuil (Tsym) et si ladite deuxième valeur est supérieure ou égale à un deuxième seuil ($T_{nrg}$), auquel cas détecter le geste candidat et le comparer à l'ensemble de gestes prédéterminés.

2. Procédé selon la revendication 1, dans lequel ledit paramètre représentatif de l'énergie du geste selon au moins un axe dépend de la variance dudit signal.

3. Procédé selon l'une des revendications précédentes, dans lequel ladite étape de détection (2) d'un geste candidat comprend en outre une sous-étape de test si la valeur d'un troisième paramètre représentatif de la fréquence dominante du signal selon ledit axe est inférieure ou égale à un troisième seuil ($T_{freq}$).

4. Procédé selon l'une des revendications précédentes, comprenant une étape d'adaptation automatique d'au moins un desdits seuils ($T_{sym}$, $T_{nrg}$, $T_{freq}$) à l'utilisateur.

5. Procédé selon la revendication 4, comprenant une étape de modification d'un desdits seuils ($T_{sym}$, $T_{nrg}$, $T_{freq}$) lorsqu'un geste candidat détecté comprend un paramètre correspondant de valeur non comprise dans une plage de valeurs de pourcentages dudit seuil correspondant.

6. Procédé selon l'une des revendications précédentes, dans lequel au moins un desdits seuils ($T_{sym}$, $T_{nrg}$, $T_{freq}$) dépend de l'orientation du terminal mobile.

7. Procédé selon l'une des revendications précédentes, dans lequel lesdits seuils ($T_{sym}$, $T_{nrg}$, $T_{freq}$) dépendent de l'axe.

8. Procédé selon l'une des revendications précédentes, comprenant une étape d'adaptation automatique de la taille de la fenêtre temporelle aux durées des gestes dans l'ensemble des gestes prédéterminés ou aux durées des gestes de l'utilisateur.

9. Procédé selon l'une des revendications précédentes, dans lequel ledit axe est un axe de mesure dudit capteur.

10. Procédé selon l'une des revendications précédentes, dans lequel ladite sous-étape consistant à calculer la valeur d'un paramètre représentatif de l'énergie du geste selon au moins un axe est effectuée lorsque ladite sous-étape consistant à calculer la valeur d'un paramètre représentatif de la symétrie du geste par rapport audit axe indique une symétrie.

11. Procédé selon l'une des revendications précédentes, dans lequel ladite fenêtre temporelle est une fenêtre glissante.

12. Procédé selon la revendication 11, comprenant, en outre, une étape de comptage du nombre d'échantillons temporels successifs ($N_{cand}$) pour lesquels, sur la fenêtre temporelle correspondante, un geste candidat est détecté, et une étape de comparaison d'un geste candidat détecté avec un ensemble de gestes prédéterminés lorsque ledit nombre d'échantillons temporels successifs ($N_{cand}$) atteint un nombre prédéterminé (N).

13. Dispositif de reconnaissance continue de gestes d'un utilisateur d'un terminal mobile préhensible muni d'un ensemble capteur de mouvement muni d'un gyromètre, comprenant des modules adaptés, pour mettre en oeuvre le procédé selon l'une des revendications 1 à 12.

14. Terminal mobile préhensible muni d'un dispositif selon la revendication 13.

**Patentansprüche**

1. Verfahren zum kontinuierlichen Erkennen der Gesten eines Benutzers eines greifbaren mobilen Endgerätes, welches mit einer mit einem Gyrometer ausgestatteten Sensorgruppe ausgestattet ist, wobei das Verfahren folgende Schritte beinhaltet, die darin bestehen, für mindestens ein Messsignal des Gyrometers über einem Zeitfenster Folgendes zu bewerkstelligen:

- Erkennen (2) einer Kandidatengeste; und
- Vergleichen (3) der Kandidatengeste mit einer Gruppe von vorbestimmten Gesten;

wobei der Schritt des Erkennens (2) einer Kandidatengeste folgende Unterschritte beinhaltet:

- Berechnen eines ersten Wertes einer Norm einer Integrale des Gyrometersignals an der Geste als einen Parameter, welcher die Symmetrie der Geste in Bezug auf mindestens eine Achse darstellt;

- Berechnen eines zweiten Wertes eines Parameters, welcher die Energie der Geste entlang mindestens einer Achse darstellt; und

- Vergleichen, ob der erste Wert kleiner oder gleich einem ersten Schwellenwert ($T_{sym}$) ist und ob der zweite Wert größer oder gleich einem zweiten Schwellenwert ($T_{nrg}$) ist, und in diesem Fall, Erkennen der Kandidatengeste und Vergleichen dieser Geste mit der Gruppe von vorbestimmten Gesten.

2. Verfahren nach Anspruch 1, bei welchem der Parameter, welcher die Energie der Geste entlang mindestens einer Achse darstellt, von der Varianz des Signals abhängt.

3. Verfahren nach einem der vorhergehenden Ansprüche, bei welchem der Schritt des Erkennens (2) einer Kandidatengeste zudem einen Unterschritt des Testens beinhaltet, ob der Wert eines dritten Parameters, welcher die dominierende Frequenz des Signals entlang der Achse darstellt, kleiner oder gleich einem dritten Schwellenwert ($T_{freq}$) ist.

4. Verfahren nach einem der vorhergehenden Ansprüche, beinhaltend einen Schritt der automatischen Anpassung von mindestens einem der Schwellenwerte ($T_{sym}$, $T_{nrg}$, $T_{freq}$) an den Benutzer.

5. Verfahren nach Anspruch 4, beinhaltend einen Schritt der Änderung eines der Schwellenwerte ($T_{sym}$, $T_{nrg}$, $T_{freq}$), wenn eine erkannte Kandidatengeste einen einem Wert entsprechenden Parameter beinhaltet, der nicht in einem Prozentsatzbereich des entsprechenden Schwellenwertes enthalten ist.

6. Verfahren nach einem der vorhergehenden Ansprüche, bei welchem mindestens einer der Schwellenwerte ($T_{sym}$, $T_{nrg}$, $T_{freq}$) von der Ausrichtung des mobilen Endgerätes abhängt.

7. Verfahren nach einem der vorhergehenden Ansprüche, bei welchem die Schwellenwerte ($T_{sym}$, $T_{nrg}$, $T_{freq}$) von der Achse abhängen.

8. Verfahren nach einem der vorhergehenden Ansprüche, beinhaltend einen Schritt der automatischen Anpassung der Zeitfenstergröße an die jeweilige Dauer der Gesten in der Gruppe von vorbestimmten Gesten oder an die jeweilige Dauer der Gesten des Benutzers.

9. Verfahren nach einem der vorhergehenden Ansprüche, bei welchem die Achse eine Messachse des Sensors ist.

10. Verfahren nach einem der vorhergehenden Ansprüche, bei welchem der Unterschritt des Berechnens des Wertes eines die Energie der Geste entlang mindestens einer Achse darstellenden Parameters erfolgt, wenn der Unterschritt des Berechnens des Wertes eines die Symmetrie der Geste in Bezug auf die Achse darstellenden Parameters eine Symmetrie angibt.

11. Verfahren nach einem der vorhergehenden Ansprüche, bei welchem das Zeitfenster ein gleitendes Fenster ist.

12. Verfahren nach Anspruch 11, zudem beinhaltend einen Schritt des Zählens der aufeinanderfolgenden zeitlichen Abtastwerte ($N_{cand}$) für welche, über dem entsprechenden Zeitfenster, eine Kandidatengeste erkannt wird, und einen Schritt des Vergleichens einer erkannten Kandidatengeste mit einer Gruppe vorbestimmter Gesten, wenn die Anzahl der aufeinanderfolgenden zeitlichen Abtastwerte ($N_{cand}$) eine vorbestimmte Anzahl (N) erreicht.

13. Vorrichtung zum kontinuierlichen Erkennen der Gesten eines Benutzers eines greifbaren mobilen Endgerätes, welches mit einer mit einem Gyrometer ausgestatteten Sensorgruppe ausgestattet ist, welche Module beinhaltet, die geeignet sind, das Verfahren nach einem der Ansprüche 1 bis 12 umzusetzen.

14. Greifbares mobiles Endgerät, welches mit einer Vorrichtung nach Anspruch 13 ausgestattet ist.

## Claims

1. A method for continuous recognition of gestures of a user of a handheld mobile device provided with a motion sensor assembly provided with a gyrometer, the method comprising steps consisting of, for at least one gyrometer measuring signal over a time window:

- detecting (2) a candidate gesture; and
- comparing (3) said candidate gesture with a set of predetermined gestures;

said candidate gesture detection step (2) including substeps consisting of:

- calculating a first value of a norm of an integral of the gyrometer signal on said gesture as a parameter indicative of the symmetry of the gesture with respect to at least one axis;
- calculating a second value of a parameter indicative of the energy of the gesture along at least one axis, and
- comparing if said first value is less than or equal to a first threshold ($T_{sym}$) and if said second value is greater than or equal to a second threshold ($T_{nrg}$), in which case, detecting the candidate gesture and comparing it to the set of predetermined gestures.

2. The method according to claim 1, wherein said parameter indicative of the energy of the gesture along at least one axis depends on the variance of said signal.

3. The method according to any one of the preceding claims, wherein said candidate gesture detection step (2) further includes a substep of testing if the value of a third parameter indicative of the dominant frequency of the signal along said axis is less than or equal to a third threshold ($T_{freq}$).

4. The method according to any one of the preceding claims, including a step of automatic adaptation of at least one of said thresholds ($T_{sym}$, $T_{nrg}$, $T_{freq}$) to the user.

5. The method according to claim 4, including a step of modifying one of said thresholds ($T_{sym}$, $T_{nrg}$, $T_{freq}$), when a detected candidate gesture includes a corresponding parameter of a value not within a range of percentage values of said corresponding threshold.

6. The method according to any one of the preceding claims, wherein at least one of said thresholds ($T_{sym}$, $T_{nrg}$, $T_{freq}$) depends on the orientation of the mobile device.

7. The method according to any one of the preceding claims, wherein said thresholds ($T_{sym}$, $T_{nrg}$, $T_{freq}$) depend on the axis.

8. The method according to any one of the preceding claims, including a step of automatic adaptation of the size of the time window to durations of gestures in the set of predetermined gestures or to durations of the user's gestures.

9. The method according to any one of the preceding claims, wherein said axis is a measurement axis of said sensor.

10. The method according to any one of the preceding claims, wherein said substep of calculating the value of a parameter indicative of the energy of the gesture along at least one axis is performed when said substep of calculating the value of a parameter indicative of the symmetry of the gesture with respect to said axis indicates a symmetry.

11. The method according to any one of the preceding claims, wherein said time window is a sliding window.

12. The method according to claim 11, further comprising a step of counting the number of successive time samples ($N_{cand}$) for which, over the corresponding time window, a candidate gesture is detected, and a step of comparing a detected candidate gesture with a set of predetermined gestures when said number of successive time samples ($N_{cand}$) reaches a predetermined number (N).

13. A device for continuous recognition of gestures of a user of a handheld mobile device provided with a motion sensor assembly provided with a gyrometer, and including at least a module configured to perform the method according to any one of claims 1 to 12.

14. A handheld mobile device provided with a device according to claim 13.

FIG.1

FIG.2

**FIG.3**

**FIG.4**

**FIG.5a**

FIG.5b

FIG.5c

2

```
signal ───▶ ┌─────────┐      ┌───────┐
            │ moyenne │─────▶│ <Tsym │──────────────┐
            └─────────┘      └───────┘              │
                                 ▲                  │
            ┌─────────┐      ┌───────┐              │
signal ────▶│ variance│─────▶│ >Tnrj │──────────────┼──▶
            └─────────┘      └───────┘              │
                                 ▲                  │
            ┌──────────┐     ┌────────┐             │
            │ Fréquence│────▶│ <Tfreq │─────────────┘
            │ dominante│     └────────┘
            └──────────┘         ▲
                 ┌───────────┐
                 │orientation│
                 └───────────┘
```

## FIG.6

2

```
signal ───▶ ┌──────────────┐    ┌──────────┐  non  ┌─────────┐
            │  Mise à jour │───▶│ Détection│──────▶│ Nacc=0  │
            │fenêtre       │    │ geste    │       └─────────┘
            │glissante     │    │ candidat │
            └──────────────┘    └──────────┘
                                     │ oui
                                     ▼
                                ┌──────────┐
                                │ Nacc+1   │
                                └──────────┘
                                     │
              non    ┌──────────┐    │ oui  ┌──────────────┐
           ◀─────────│ Nacc≤N ? │◀────────▶│ Comparaison  │
                     └──────────┘          │ base de      │
                                           │ données      │
                                           └──────────────┘
```

## FIG.7

**EP 2 881 841 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012016641 A
- US 2010214211 A1
- US 2013261771 A1

**Littérature non-brevet citée dans la description**

- **B. W. CHOE ; J. K. MIN ; S. B. CHO.** Online gesture recognition for user interface on accelerometer built-in mobile phones. *Neural Information Processing. Models and Applications,* 2010, 650-657